# EUROPÄISCHE PATENTSCHRIFT

(11) **EP 0 350 807 B1**
(45) Veröffentlichungstag und Bekanntmachung des Hinweises auf die Patenterteilung: **20.11.1996**
(21) Anmeldenummer: 89112434.9
(22) Anmeldetag: 07.07.1989
(51) Int. Cl.: B29C 44/00, B29C 67/20, B29B 17/00

(54) **Formteil aus Schaumstoffplatten und Verfahren zu dessen Herstellung**
Moulded foam panel and method for its production
Panneau moulé en mousse et procédé pour sa fabrication

(30) Priorität: 14.07.1988 AT 1811/88
(43) Veröffentlichungstag der Anmeldung: 17.01.1990
(73) Patentinhaber: C.A. GREINER & SÖHNE GESELLSCHAFT M.B.H., A-4550 Kremsmünster (AT)
(72) Erfinder: Eder, Bernhard, A-4020 Linz a.d. Donau (AT); Bürger, Hans, A-4050 Traun (AT); Reitinger, Franz, A-4112 Rottenegg Nr. 13 (AT)
(74) Vertreter: Secklehner, Günter, Dr.

(56) Entgegenhaltungen:
- EP-A- 0 118 876
- EP-A- 0 146 521
- EP-A- 0 177 621
- EP-A- 0 208 268
- DE-A- 2 556 224
- DE-A- 2 719 714
- DE-A- 2 751 774
- DE-A- 3 403 386
- DE-A- 3 534 690
- DE-A- 3 623 789
- DE-A- 3 627 431
- FR-A- 2 126 007
- FR-A- 2 220 616
- GB-A- 1 147 483
- GB-A- 2 040 948
- GB-A- 2 163 388
- US-A- 4 330 584
- US-A- 4 591 469
- US-A- 4 666 646

## Beschreibung

Die Erfindung betrifft einen Formteil aus einer Mischkunststoffplatte, wie er im Oberbegriff des Patentanspruches 1 beschrieben ist, sowie ein Verfahren zur Herstellung eines derartigen Formteiles.

Es ist bereits aus der US-A-4 666 646 ein Verfahren bekannt, mit dem ein hochdichter Polyurethanschaum hergestellt wird. Bei diesem Verfahren ist vorgesehen, daß dem flüssigen Rohstoff des herzustellenden Kunststoffschaums zur Erhöhung des Raumgewichtes des fertigen Kunststoffschaums Abfall-PU-Schaummaterial zugesetzt wird. Durch eine geringe Flockengröße dieses Abfall-PU-Schaummaterials soll eine starke Dichteerhöhung unter gleichzeitiger Reduzierung der notwendigen Primär-Rohstoffmenge erzielt werden. Um eine gewünschte Raumdichte des aus dem Rohstoff herzustellenden Schaummaterials mit dem Abfall-PU-Schaummaterial zu erreichen, soll das Ausreagieren in einer Form erfolgen und dann dieses auf eine gewünschte Form zugeschnitten werden. Dadurch sollen Formteile mit einer Raumdichte zwischen 58 und 60 kg/m³ bzw. 178 kg/m³ erreicht werden. Nachteilig ist bei den nach diesem Verfahren hergestellten Formteilen, daß eine einheitlich hohe Dichte über den gesamten Querschnittsbereich des Formteils erzielt wird und die Gesamtdichte des Formteils immer auf die Maximalfestigkeit in einem gewünschten Bereich abgestellt werden muß.

Es sind bereits Formteile bekannt geworden - gemäß DE-A-36 27 431 der gleichen Anmelderin - bei welchen der Kunststoffschaum des Formteiles in unterschiedlichen Schichten ein unterschiedliches Raumgewicht aufweist. Außerdem ist es bereits bekannt, derartige Formteile in über die Fläche verteilten Flächenbereichen unterschiedlich stark zu verdichten, wobei das Raumgewicht, bezogen auf die gleiche Flächeneinheit in diesen unterschiedlich verdichteten Flächenbereichen, etwa gleich groß, die Dicke des Formteiles jedoch unterschiedlich ist. Des weiteren ist es bereits bekannt, derartige Formteile mit unterschiedlich ausgebildeten Deckschichten zu versehen bzw. in die Formteile Tragkörper einzuarbeiten. Die zur Herstellung derartiger Formteile verwendeten Materialien bestehen aus Weichschaumstoff, dessen Zellstruktur in den Randbereichen verdichtet ist. Derartige Formteile werden als Schallschutzelemente verwendet und haben sich dort auch bestens bewährt, jedoch reicht die mechanische Beanspruchbarkeit derartiger Formteile für manche Anwendungsfälle nicht aus.

Desweiteren ist es bereits bekannt, insbesondere für Verpackungszwecke, Mischkunststoffplatten herzustellen, die aus Schaumplatten aus weichem Schaumstoff bestehen, die mit Kunststoffabfällen gefüllt sind. Durch die große Anzahl an offenen Zellen eines derartigen weichen Schaumstoffes haften die einzelnen Teile des Schaumstoffgranulates bzw. der Füllstoffe nur über das Zellgerippe aneinander, wodurch bei mechanischen Beanspruchungen die Schaumstoffgranulate bzw. Füllstoffe leicht herausbrechen und diese Mischkunststoffplatten mechanisch nicht stark beanspruchbar sind.

Die Aufgabe der vorliegenden Erfindung liegt darin, einen Formteil sowie ein Verfahren zur Herstellung eines derartigen Formteiles zu schaffen, der einfach in unterschiedlich hohen Raumgewichten hergestellt und der unter Beibehaltung seiner elastischen Grundeigenschaften an unterschiedliche mechanische Belastungen, insbesondere Kantenpressungen oder dgl., angepaßt werden kann.

Diese Aufgabe der Erfindung wird durch die im Kennzeichenteil des Patentanspruches 1 angegebenen Merkmale gelöst. Der Vorteil der überraschend einfach scheinenden Maßnahme liegt darin, daß durch die Verwendung von bestimmten Prozentsätzen von Schaumstoffgranulat bzw. Füllstoffen das Raumgewicht des Schaumstoffblockes bzw. der Schaumstoffplatten einfach verändert werden kann und die einzelnen Granulate des Schaumstoffes bzw. der Füllstoffe über die Zellstege und bzw. oder Zellwände des weichen elastischen Schaumkunststoffes nahezu schwingungsgedämpft gelagert sind. Kommt es nun zu Kantenbeanspruchungen bzw. insgesamt stärkeren Beanspruchungen des Formteiles, so kann die Verbindung zwischen den einzelnen Granulaten des Schaumstoffes bzw. der Füllstoffe durch die unter Druck- und Temperatureinwirkung erfolgte Verformung verändert, vor allem verstärkt werden. Durch das Zusammendrücken des Zellgerippes, also der Zellstege und bzw. oder der Zellwände und auf Grund der vorhergehenden Erwärmung klebt eine höhere Anzahl von Verbindungsstegen an den einzelnen Flocken fest bzw. werden die Zellstege bzw. Zellwände durch die Verformung indirekt versteift und damit höher belastbar. Dadurch kann, ausgehend von einer Mischkunststoffplatte mit gleichem Raumgewicht durch unterschiedlich starke Vedichtung und damit Verfestigung der Mischkunststoffplatte die Belastbarkeit an unterschiedliche Anwendungsfälle einfach angepaßt werden. Der überraschende Vorteil dieser Lösung liegt aber darin, daß sich durch diese Verdichtung nicht nur das Raumgewicht ändert, sondern auch das Schwingungsverhalten der im elastischen Weichschaumstoff eingeschäumten Schaumstoffgranulate bzw. Füllstoffe, wodurch sich zusätzlich zu der Veränderung des Raumgewichtes die Schallabsorbtions- bzw. -reflexionseigenschaften in überraschender Weise zusätzlich verändern. Dadurch kann nunmehr ein derartiger Formteil nicht nur zur Verkleidung sondern gleichzeitig auch zur Schalldämmung in einem gewünschten Frequenzbereich eingesetzt bzw. an diesen Einsatz, ausgehend von einem gleichbleibenden Grundprodukt, einfach angepaßt werden. Weiters kann beispielsweise in den Befestigungsbereichen eine hohe Festigkeit und Beanspruchbarkeit der Formteile erreicht werden, während in den daran anschließenden Bereichen die gewünschten Dämpfungseigenschaften, beispielsweise für die Schalldämmung bzw. die Dämpfung von aufprallenden Gegenständen, wie dies z.B. für Verkleidungsteile von Kraftfahrzeugen vorteilhaft ist, verwendet werden können.

Nach einer Weiterbildung gemäß Patentanspruch 2 können die gewünschten mechanischen Eigenschaften mit den für den Anwendungsfall benötigten schall- bzw. schwingungsdämpfenden Eigenschaften einfach kombiniert werden, da die einzelnen Schichten entsprechend ihrem Anwendungsfall auf ein gewisses Raumgewicht verdichtet bzw. mit unterschiedlichen Füllstoffen bzw. Schaumstoffgranulaten gefüllt werden können.

Vorteilhaft ist weiters auch eine Ausbildung nach Patentanspruch 3, wodurch in einfacher Weise das Raumgewicht und damit die Schall- und Schwingungsabsorbtionseigenschaften verändert werden können.

Es ist aber auch eine Ausführungsform nach Patentanspruch 4 von Vorteil, da bedingt durch die starke Erwärmung der Platten vor der Verformung die Wärmeenergie durch das Zerschmelzen von Pulver bzw. Folien gleichzeitig zur Verklebung einzelner Mischkunststoffplatten bzw. der Mischkunststoffplatten mit entsprechenden Deckschichten bewirkt werden kann. Ein weiterer Vorteil liegt überdies darin, daß durch Verwendung von entsprechenden Schmelzpulvern, wie z.B. Phenolharz, durch das Eindringen des Pulvers in die offenen Zellen des Zellgerüstes der Mischkunststoffplatten neben der formschlüssigen Verbindung der Mischkunststoffplatten auch eine Verstärkung durch Verfestigung der Oberflächenbereiche bewirkt werden kann und somit an beliebiger Stelle eines Formteiles eine zusätzliche Versteifung des Zellgerüstes erzielt werden kann.

Es ist aber auch eine Weiterbildung gemäß Patentanspruch 5 vorteilhaft, wodurch eine innige Verbindung zwischen den Verstärkungsteilen und der Mischkunststoffplatte beispielsweise während des Verdichtungsvorganges zur Herstellung eines Formteiles erreicht werden kann und überdies über diese großflächige Einbettung diese Verstärkungsteile auch zur Befestigung und Halterung der Formteile herangezogen werden können. Die Ausreißfestigkeit derartiger Verstärkungsteile kann dadurch einfach beeinflußt werden, daß die Verdichtung und die Erhöhung des Raumgewichtes der Mischkunststoffplatten im Bereich der Verstärkungsteile gezielt erhöht wird, sodaß auf Grund der intensiven Verklebung über eine große Fläche hohe Kräfte von den Verstärkungsteilen in den Formteil oder vom Formteil auf eine Verankerung übertragen werden können, ohne daß es zu Ablösungen zwischen den Mischkunststoffplatten und den Verstärkungsteilen kommt.

Vorteilhaft ist auch eine Ausbildung nach Patentanspruch 6, da damit die Vorteile der universellen Anpassung an die Dämpfungseigenschaften bzw. mechanischen Festigkeiten nicht nur für plattenförmige, sondern auch für räumlich verformte Bauteile verwendet werden können.

Von Vorteil ist auch eine Weiterbildung nach Patentanspruch 7. Damit ist es möglich, aus Kunststoffplatten mit im wesentlichen gleicher Zusammensetzung Platten mit unterschiedlichem Raumgewicht herzustellen.

Von Vorteil ist aber auch eine Ausbildung gemäß Patentanspruch 8, da dadurch die Zug- und Reißfestigkeit derartiger Mischkunststoffplatten bzw. der daraus gefertigten Bauteile erhöht werden können, ohne daß die elastisch dämpfenden Eigenschaften erheblich nachteilig beeinflußt werden.

Die Erfindung umfaßt weiters auch ein Verfahren zur Herstellung von Formteilen aus Mischkunststoffplatten, wie dies im unabhängigen Patentanspruch 9 beschrieben ist. Der Vorteil des erfindungsgemäßen Verfahrens liegt vor allem darin, daß nunmehr viele Materialien, die bis jetzt nur schwer zu entsorgen waren, zur Produktion von Formteilen aus Schaumstoffplatten wieder verwendet werden können und überdies Schaumstoffplatten hergestellt werden können, die gegenüber den bisher bekannten Platten vor allem bei der Dämmung von Schall bzw. zur Aufschlagdämmung herangezogen werden können. Dadurch wird das Produktionsverfahren von Schalldämmplatten bzw. Formteilen, die gleichzeitig zur Schalldämmung und auch zur Schlagdämmung eingesetzt werden sollen, vereinfacht und die Herstellung verbilligt, da die schaumstoffproduzierenden Betriebe die bei der Produktion anfallenden Abfälle nicht mehr entsorgen müssen. Dazu kommt, daß auch bei Verwendung der Mischkunststoffplatten durch Erwärmung vor dem Formgebungsvorgang zur Herstellung der Formteile trotz der hohen Isolierwirkung derartiger Materialien bis in den Kernbereich dieser Schaumstoffplatten eine ausreichende Erwärmung der Zellstruktur, d.h. also der Zellstege und der Zellwände, erfolgt, sodaß die nachfolgende Komprimierung möglichst einheitlich über die gesamte Dicke erfolgt und die vorgenommene Verformung bleibend ist, also keine oder nur sehr geringfügige, elastische Rückfederungen gegeben sind. Durch das Zusammenpressen nach dem entsprechenden Vorerwärmen wird außerdem sichergestellt, daß die verformten Zellstege bzw. Zellwände bzw. das zusammengedrückte Zellgerüst sich mit den eingeschäumten Schaumstoffgranulaten bzw. Füllstoffen inniger verbinden bzw. verkleben können. Dies ermöglicht es, die physikalischen Eigenschaften zu verändern, insbesondere auch die mechanische Beanspruchbarkeit derartiger Mischkunststoffplatten zu erhöhen.

Weitere vorteilhafte Maßnahmen beschreibt Patentanspruch 10, wodurch das Raumgewicht und die mechanischen Grundfestigkeiten einfach verändert werden können.

Ein vorteilhaftes Vorgehen ist im Patentanspruch 11 beschrieben, da dadurch sichergestellt ist, daß über das gesamte Volumen der Schaumstoffplatte bzw. des Formteiles eine gleichmäßige Aufteilung von Füllstoffen bzw. Schaumstoffgranulaten und flüssigem Kunststoff erfolgt, sodaß Lunkerbildung oder Nestbildungen möglichst verhindert werden. Weiters hat dieser Verfahrensablauf den Vorteil, daß durch das Einbringen des flüssigen Rohstoffes, der eine gewisse Klebrigkeit aufweist, nach dem Durchmischen der Füllstoffe- bzw. Schaumstoffgranulate deren Oberfläche mit dem klebrigen Rohstoff benetzt ist und beim Einbringen in der Form durch diese leichte Kleberwirkung ein Absinken der schwereren Füllstoffe bzw. Schaumstoffgranulate auf den Boden der Form ohne zusätzliche Maßnahmen verhindert werden kann und dadurch auch ein gleichmäßiges Aufschäumen bzw. ein gleichmäßiger Aufbau des Zellgerüstes zwischen den Füllstoffen und den Schaumstoffgranulaten erreicht werden kann. Damit wird eine annähernd gleichmäßige Schaumstoffplattenstruktur hinsichtlich der verschiedenen Dämmwirkungen, wie Aufprall- bzw. Schalldämmung und Festigkeitseigenschaften, erreicht.

Vorteilhaft ist auch ein Vorgehen nach Patentanspruch 12, da dadurch ohne Zusatzmaßnahmen bis zum Ausreagieren des Rohstoffes das Weichschaumgranulat und die Füllstoffe in ihrer durch die Mischung erhaltenen Form gehalten werden.

Vorteilhaft sind weiters auch Maßnahmen nach Patentanspruch 13, weil dadurch eine in allen räumlichen Richtungen der Mischkunststoffplatte wirksame Bindung der Flocken des Schaumstoffgranulates mit den Füllstoffen gegeben ist.

Es ist aber auch ein Vorgehen nach Patentanspruch 14 möglich, da dadurch bereits der Schäumvorgang während des Einbringens der Masse in die Blockform eingeleitet und die Produktionszeit der Mischkunststoffplatte verkürzt werden kann.

Nach einer anderen Vorgangsweise gemäß Patentanspruch 15 ist vorteilhaft, daß die Feuchtigkeit unmittelbar nach Beginn des Einbringens der Mischung in die Blockform zugeführt wird, da dadurch ein zu frühes Aufschäumen des Rohstoffes und somit eine Blockierung des Formeinlasses zuverlässig verhindert werden kann.

Weitere vorteilhafte Maßnahmen beschreibt Patentanspruch 16, wodurch der Inhalt der Blockform in relativ kurzer Zeit völlig ausreagieren kann und die Schäumzeit, über welche der Schaumstoffblock in der Blockform verbleiben muß, erheblich verkürzt werden kann.

Vorteilhaft ist es aber auch ein Verfahrensablauf nach Patentanspruch 17, da dadurch die Vorteile der Dämmung und die besseren Festigkeitseigenschaften auch für schwierige räumliche Teile verwendbar sind und damit neue Einsatzbereiche für den Kunststoffschaum bzw. die Mischkunststoffplatten geschaffen werden können.

Vorteilhaft ist weiters ein Vorgehen gemäß Patentanspruch 18, da dadurch, ausgehend vom gleichen Grundmaterial in den Befestigungsbereichen, eine höhere Festigkeit erzielt werden kann, wie in den diesen benachbarten, hauptsächlich zur Schall- oder Schlagdämmung verwendeten Bereichen.

Weiters ist es auch eine Maßnahme nach Patentanspruch 19 vorteilhaft, wodurch das Aufbringen von flüssigen Klebern und das Hantieren von mit flüssigen Klebern beschichteten Bauteilen vermieden werden kann.

Vorteilhaft ist durch den Verfahrensablauf gemäß Patentanspruch 20, daß die zur Verdichtung benötigte Wärme gleichzeitig auch zur Verbindung der Mischkunststoffplatten mit verschiedenen Deckschichten bzw. zum Verbinden unterschiedlicher Mischkunststoffplatten verwendet werden kann. Damit kann ein zusätzlicher Arbeitsvorgang für das Einstreichen mit Kleber und das Einspannen zum Abwarten der Reaktionszeit des Klebers entfallen.

Nach einer anderen Vorgehensvariante gemäß Patentanspruch 21 ist es vorteilhaft, daß dadurch je nach den gewünschten Dämmeigenschaften für mechanische Belastungen bzw. zur Schalldämmung, Schichten mit unterschiedlichem Raumgewicht nahtlos aneinander gefügt werden können. Durch die einheitliche Verformung der Schichten miteinander, kann dann auch im fertigen Formteil ein gleichmäßiger Dämmungswert über die gesamte Oberfläche desselben erzielt werden.

Nach weiteren vorteilhaften Maßnahmen nach Patentanspruch 22 können widerstandsfähige Befestigungsstellen bzw. Belastungsbereiche für Beanspruchungen geschaffen werden, die von der Mischkunststoffplatte alleine nicht aufgenommen werden können, wobei durch die Verwendung mehrerer Mischkunststoffplatten zur Erstellung einer Mischkunststoffsandwichplatte durch das Zusammenfügen mehrerer Schichten bereits eine höhere Festigkeit erreicht wird.

Weiters ist auch eine Verfahrensvariante nach Patentanspruch 23 vorteilhaft, wodurch eine übermäßige Verdichtung von jenen Bereichen der Mischkunststoffplatten, in welchen der Verstärkungsteil eingelegt ist, verhindert und auch in Bereichen von Einlageteilen ein in etwa gleiches Raumgewicht nach der Verdichtung der Mischkunststoffplatten bzw. Herstellung des Formteiles erreicht werden kann.

Nach einem weiteren Verfahrensablauf gemäß Patentanspruch 24 können in den Mischkunststoffsandwichplatten Bereiche mit unterschiedlichem Raumgewicht und gegebenenfalls unterschiedlicher Fülldichte von Schaumstoffgranulaten bzw. Füllstoffen zu einem Formteil vereinigt werden.

Vorteilhaft ist durch die Maßnahme nach Patentanspruch 25, daß dadurch mit einer Form verschiedene Verdichtungsvorgänge der Mischkunststoffplatten auf unterschiedliche Raumgewichte bzw. Dichte vorgenommen werden können.

Nach einer anderen Vorgehensvariante gemäß Patentanspruch 26 ist vorteilhaft, daß in Verbindung mit der Verdichtung bzw. der Erhöhung des Raumgewichtes oder der Verformung der Mischkunststoffplatten diese mit Verstärkungsteilen bzw. mit anderen Mischkunststoffplatten in einem Arbeitsgang verbunden werden können und dadurch die Produktionszeiten von, nach dem Verfahren hergestellten Produktionsteilen, verringert werden können.

Nach einer weiteren Vorgangsweise nach Patentanspruch 27 wird erreicht, daß die Platten bzw. die Formteile nach dem Beenden des Preßvorganges und Ablauf der entsprechenden Aushärtezeit gleichzeitig durch Verwendung der selben Form weiter bearbeitet werden können. Durch den verbliebenen Hub zwischen den einzelnen Formteilen kann beispielsweise ein Stanzvorgang vorgenommen werden.

Schließlich ist auch ein Vorgehen nach Patentanspruch 28 vorteilhaft, weil dadurch am Ende des erfindungsgemäßen Verfahrens ein einbaufertiger Formteil, gegebenenfalls mit den entsprechenden Oberflächenbeschichtungen und dgl., erhalten werden kann.

Zum besseren Verständnis der Erfindung wird diese im nachfolgenden anhand der in den Zeichnungen gezeigten Ausführungsbeispiele näher erläutert.

Es zeigen:
- Fig. 1: einen erfindungsgemäß ausgebildeten Formteil in schaubildlicher Darstellung;
- Fig. 2: den Formteil nach Fig.1 in Draufsicht, geschnitten, gemäß den Linien II-II in Fig.1;
- Fig. 3: den Formteil nach Fig.1 in Seitenansicht, geschnitten, gemäß den Linien III-III in Fig.1;
- Fig. 4: einen Teil des Formteiles nach Fig.2 in größerem Maßstab;
- Fig. 5: einen Teil einer Mischkunststoffplatte in Seitenansicht, geschnitten;
- Fig. 6: einen Teil eines anderen erfindungsgemäßen Formteiles aus einer Mischkunststoffsandwichplatte in Seitenansicht, geschnitten und in vergrößerter schematischer Darstellung;
- Fig. 7: eine andere Ausführungsform eines erfindungsgemäßen Formteiles aus einer Mischkunststoffsandwichplatte mit im Formteil eingearbeiteten Verstärkungsteilen in Seitenansicht, teilweise geschnitten;
- Fig.8: ein Blockschaltbild einer Anlage zur Durchführung des erfindungsgemäßen Verfahrens zur Herstellung von Formteilen, in vereinfachter schematischer Darstellung.

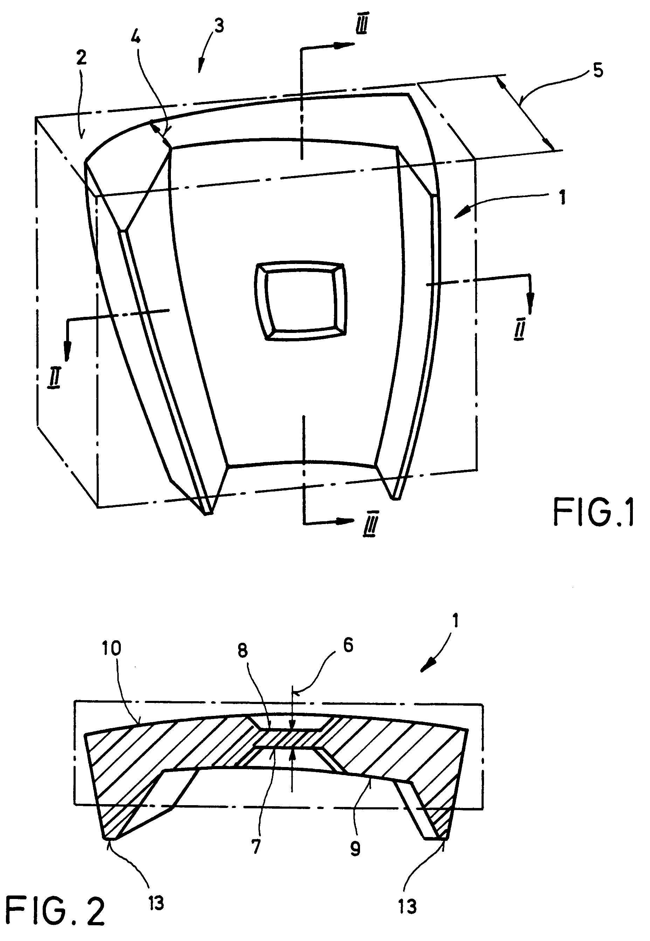

In den Fig.1 bis 5 ist ein Formteil 1 gezeigt, der durch räumliche Verformung einer in dünnen strichpunktierten Linien dargestellten Mischkunststoffplatte 2 gebildet wurde. Wie aus dieser räumlichen Darstellung des Formteiles 1, der beispielsweise als Einlageelement für einen Kraftfahrzeugverkleidungsteil verwendet werden kann, zu ersehen ist, wurde die Mischkunststoffplatte 2 sowohl räumlich verformt, d.h. gekrümmt, als auch auf unterschiedliche Dicken zusammengepreßt. So ist aus dieser Darstellung ersichtlich, daß der Formteil 1 im Bereich eines Stirnendes 3 eine Dicke 4 aufweist, die ca. nur halb so groß ist wie eine Dicke 5 der Mischkunststoffplatte vor der Verformung zu dem Formteil 1.

Wie besser aus der Fig.2 zu ersehen ist, ist eine Wandstärke 6 noch erheblich geringer als die Dicke 4 im Bereich des Stirnendes 3 des Formteiles 1. Um die durch die unterschiedlich starke Verformung bedingte unterschiedliche Dichte und damit verbunden das unterschiedliche Raumgewicht, bezogen auf die gleiche Volumenseinheit, beispielsweise einen 1mm³ darzustellen, wurde die Dichte der Schraffur in etwa an den Dichteverlauf im Formteil 1 angepaßt. Daraus ist zu ersehen, daß im Bereich der Ausnehmungen 7,8 in den einander gegenüberliegenden Oberflächen 9,10, wie auch durch die sehr dichte Schraffur angedeutet, daß das höchste Raumgewicht, bezogen auf eine einheitliche Volumenseinheit im gesamten Bereich des Formteiles 1 gegeben ist, obwohl das Raumgewicht pro Flächeneinheit annähernd unverändert ist. In dem zwischen den Ausnehmungen 7,8 und einem Randwulst 11 befindlichen Bereich ist eine Dichte und damit verbunden ein Raumgewicht geringer als im Bereich zwischen den Ausnehmungen 7,8, jedoch noch immer höher als beispielsweise im Bereich des Randwulstes 11, in dem die mit punktierten Linien schematisch eingezeichnete Mischkunstkunststoffplatte 2 nur geringfügig verdichtet ist.

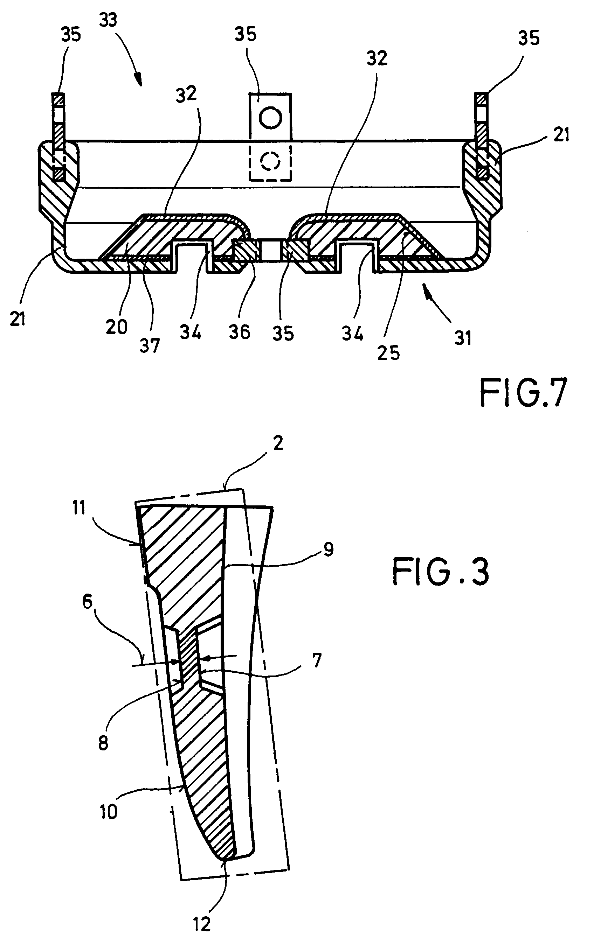

Dementsprechend nimmt die Dichte in dem sich von den Ausnehmungen 7,8 gegen das Stirnende 12 zu verjüngenden Bereich - Fig.3 - in Richtung der Spitze ständig zu. Der gleiche Effekt ergibt sich bei diesem Bauteil auch in den sich zu den Seitenkanten 13 zu verjüngenden Bereichen, in welchen die Dichte und somit das Raumgewicht pro Volumenseinheit entsprechend der Abnahme der Wandstärke zunimmt.

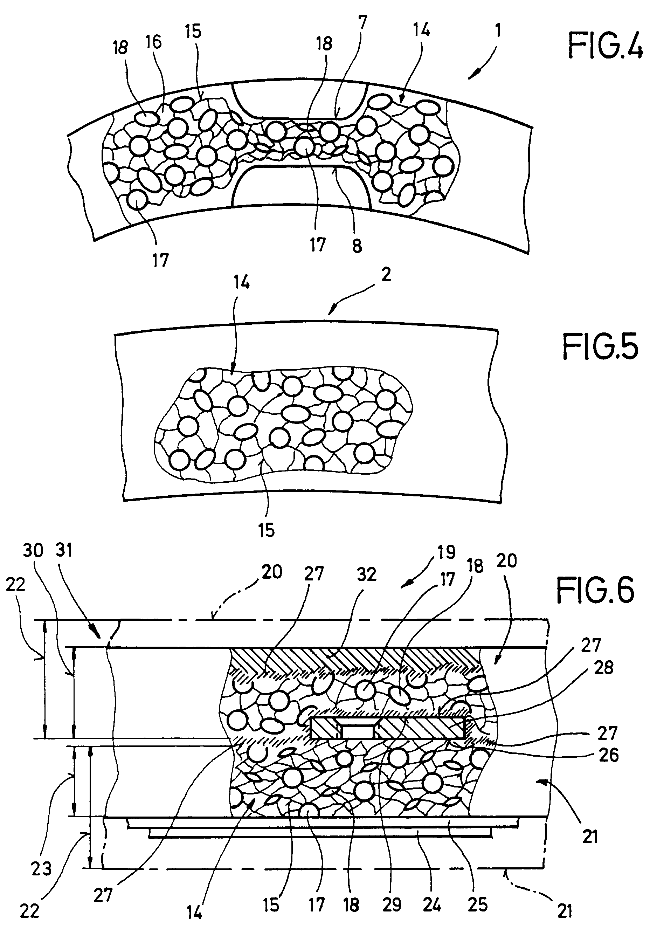

Wie besser aus Fig.4 zu ersehen ist, in welcher schematisch und zum besseren Verständnis maßstäblich stark verzerrt, das Schnittbild durch den Formteil 1 gezeigt ist, kommt es unabhängig von der Stärke der Verdichtung durch die entsprechend starke Vorwärmung der Schaumstoffplatten in etwa zu einer linearen Verdichtung eines Zellgerüstes 14, welches aus mehr oder weniger verformten Zellstegen 15, die zwischen sich offene Zellen 16 einschließen, besteht. Das Zellgerüst 14 erstreckt sich zwischen den schematisch durch Kreise angedeuteten Füllstoffen 17 bzw. den schematisch durch Ellipsen dargestellten Schaumstoffgranulaten 18 aus einem weichen Schaumstoff. Die Füllstoffe 17 können dabei durch Korkgranulat, Gummigranulat, Kreide, Kalziumkarbonat oder zermahlene PUR-Hartabfälle, z.B. Integralteile oder RIM-Teile und thermoplastische Kunststoffabfälle, gebildet sein. Die Schaumstoffgranulate 18 aus Weichschaum werden üblicherweise durch PUR-Schaumstoffabfall, insbesondere von Weichschäumen, die beispielsweise auch mit verschiedenen Beschichtungen, wie z.B. Kunstleder, Stoff oder dgl., versehen sind, gebildet. Sowohl die Schaumstoffe als auch die Füllstoffe werden in entsprechenden Mühlen auf Korngrößen zwischen 2 mm und 20 mm zerkleinert. Wie nun aus der Darstellung in Fig.4 in den verschiedenen unterschiedlichen Bereichen, beispielsweise zwischen den Ausnehmungen 7,8 und den benachbarten Bereichen zu ersehen ist, ist das Zellgerüst 14 zwischen den Füllstoffen 17 und den Schaumstoffgranulaten 18 angeordnet.

In Fig.5 ist eine Mischkunststoffplatte 2 in ihrem Zustand vor der räumlichen Verformung zu dem Formteil 1 dargestellt. Wie aus dieser Darstellung ersichtlich, sind die Zellstege 15 des Zellgerüstes 14 in Art von Umfangslinien einer Kugel ausgebildet. Demgegenüber sind sie in den den Ausnehmungen 7,8 benachbarten Bereichen des Formteiles 1, wie schematisch durch die abgeknickte Darstellung gezeigt, durch Einwirkung von Temperatur und Druck bleibend verformt, sodaß die einzelnen Füllstoffe 17 bzw. die zwischen diesen verteilt angeordneten Schaumstoffgranulaten 18 der Schaumstoffe bereits näher beisammen liegen als dies bei der Mischkunststoffplatte nach Fig.5 der Fall ist.

Wie weiters aus Fig.4 zu ersehen ist, ist das Zellgerüst 14 im Bereich zwischen den Ausnehmungen 7,8 durch die hohe Verdichtung der Mischkunststoffplatte 2 nahezu total zusammengepreßt bzw. geschmolzen, sodaß die Füllstoffe 17 bzw. die Schaumstoffgranulate 18 nahezu unmittelbar aneinander liegen bzw. kleben und so einen annähernd kompakten Körper bilden. Wie weiters in Fig.4 schematisch dargestellt wurde, kommt es bei einer derart starken Verdichtung des Zellgerüstes 14, wie im Bereich der Ausnehmungen 7,8 auch dazu, daß die Schaumstoffgranulate 18 des weichen Schaumstoffes stärker zusammengedrückt und verdichtet werden. Dies wurde durch eine geringere Höhe der die Schaumstoffgranulate 18 darstellenden Ellipsen versucht schematisch anzudeuten. Es sei jedoch ausdrücklich darauf hingewiesen, daß es sich bei den Darstellungen in den Fig.4 und 5 um Schaubilder handelt, die das Verständnis für die vorliegende Erfindung erleichtern sollen und die daher sowohl hinsichtlich der gewählten äußeren Form der einzelnen Bestandteile als auch hinsichtlich der Größenverhältnisse stark verzerrt gezeichnet wurden.

Wie aus dieser Darstellung aber weiters zu ersehen ist, kommt es durch das Zusammendrücken des Zellgerüstes 14 zu einer geringeren Spannweite zwischen den einzelnen Abstützpunkten des Zellgerüstes bzw. einer größeren Anzahl von Verstrebungen zwischen den einzelnen Schaumstoffgranulaten 18 bzw. den Füllstoffen 17. Dadurch wird die Festigkeit gegen Verformungen erhöht und der Formteil gegen mechanische Beanspruchungen widerstandsfähiger.

In Fig.6 ist ein Teil eines Formteiles 19 gezeigt, der aus zwei Mischkunststoffplatten 20,21 besteht. In strichpunktierten Linien ist eine Ausgangsdicke 22 der Mischkunststoffplatte 20 gezeigt. Aber auch die Mischkunststoffplatte 21 hat eine Ausgangsdicke 22 und entspricht somit der Mischkunststoffplatte 20 am Beginn der Herstellung des Formteiles 19. Die Mischkunststoffplatte 21 wird zuerst in eine Form zur Herstellung eines Formteiles eingelegt und auf eine Dicke 23 verdichtet, die etwa der Hälfte der Ausgangsdicke 22 entspricht. Dadurch werden, wie schematisch durch die Form der Schaumstoffgranulate 18 und der Füllstoffe 17 angedeutet, auch diese räumlich zusammengepreßt, wobei sich diese Volumensveränderung bei den Schaumstoffgranulaten 18 stärker bemerkbar macht, da sie aus Weichschaumstoff bestehen, während die Füllstoffe 17, wie beispielsweise Gummigranulat oder Korkgranulat, auch bei sehr starker Verdichtung der Mischkunststoffplatte 21 nahezu unverändert bleiben. Vor allem kommt es aber dazu, daß das Zellgerüst 14 zwischen diesen Schaumstoffgranulaten 18 und den Füllstoffen 17, bedingt durch die starke Verdichtung der Mischkunststoffplatte 21 zusammenbricht und die ursprüngliche Kugelform der Zellstege bzw. -wände entsprechend der Stärke der Verdichtung zerbrochen oder deformiert wird. Dadurch kommt es zu einer Verdichtung der Abstützstellen zwischen den Schaumstoffgranulaten 18 bzw. den Füllstoffen 17 und neben der Erhöhung des Raumgewichtes bzw. der Dichte der Platte auch zu einer Erhöhung der mechanischen Festigkeiten. Gleichzeitig mit dem Verdichten der Mischkunststoffplatte 21 ist es möglich, in die Form eine Deckschicht 24, beispielsweise eine Fasermatte oder ein Kunstleder oder Lederteil, aber auch ein Gewebe oder Gewirke aus unterschiedlichen Fasern aufzulegen. Auf diese Deckschicht 24 kann eine Schmelzklebefolie 25 aufgelegt sein, z.B. eine Polyäthylen-Folie auf die dann die zu verdichtende Mischkunststoffplatte 21 aufgelegt wird. Durch die hohe Temperatur der Mischkunststoffplatte 21 die notwendig ist, um eine Verformung des Zellgerüstes 14 zu ermöglichen und gegebenenfalls eine zusätzliche Beheizung der Form schmilzt die Schmelzklebefolie 25 und verbindet somit die Deckschicht 24 und die Mischkunststoffplatte 21 formschlüssig.

Nach Beendigung der Verdichtung der Mischkunststoffplatte 21 wird die Form geöffnet und es kann auf die von der Deckschicht 24 abgewendete Oberfläche 26 ein durch eine Schraffur angedeutetes Schmelzpulver 27, beispielsweise ein Phenolharzpulver, aufgestreut werden. Gleichzeitig kann auch ein Verstärkungsteil 28, der durch eine Platte aus Metall oder Kunststoffen oder durch entsprechende Fasermatten und dgl. gebildet sein kann, auf die Oberfläche 26 der Mischkunststoffplatte 21 aufgelegt werden. Eine von der Mischkunststoffplatte 21 abgewandte Oberseite 29 des Verstärkungsteiles 28 kann ebenfalls mit Schmelzpulver 27 bestreut werden. Daraufhin wird die Mischkunststoffplatte 20 aufgelegt und nach Schließen der Form auf eine Dicke 30, z.B. um 20 Prozent verdichtet. Durch diese Verdichtungswirkung kommt es zu einer stärkeren Verklebung bzw. Verpressung der in ihrer Raumform nahezu unveränderten Schaumstoffgranulate 18 und Füllstoffe 17, wodurch die mechanische Festigkeit erhöht, jedoch die Elastizität und damit die Dämpfung von mechanischen Schlägen beibehalten wird. Gleichzeitig wird bei der Verformung der Mischkunststoffplatte 20 diese im Bereich des Verstärkungsteiles 28 stärker verformt, sodaß dieser praktisch in die Mischkunststoffplatte 20 eingebettet wird und über das Schmelzpulver 27 mit dieser bzw. der Mischkunststoffplatte 21 zusätzlich noch verklebt wird.

Wie schematisch durch die das schmelzpulver 27 darstellende Schraffur gezeigt wurde, dringt ein Teil des verflüssigten Schmelzpulvers 27 in die Oberflächen 26 der Mischkunststoffplatten 20 bzw. 21 ein und füllt diese aus, sodaß es durch das Schmelzpulver auch zu Verfestigungen im Oberflächenbereich kommt. Die Kleberschicht, die durch das Schmelzpulver 27 gebildet wird, ist vor allem dann, wenn es sich bei dem Schmelzpulver um Phenolharzpulver handelt, auch als Verstärkungselement anzusehen, da die Schmelzpulverschicht ein Verstärkungselement in der Mischkunststoffsandwichplatte 31, aus der der Formteil 19 gebildet wird, darstellt.

Gleichzeitig mit dem Verdichten der Mischkunststoffplatte 20 oder anschließend daran kann durch Einlegen einer Schmelzklebefolie 25 oder durch Aufstreuen von Schmelzpulver 27 mit einer Oberfläche 26 der Mischkunststoffplatte 20 eine Deckschicht 32, die aus den unterschiedlichsten Materialien, beispielsweise aber auch durch eine Blechplatte oder dgl., gebildet sein kann, auf den Formteil 19 aufgebracht werden.

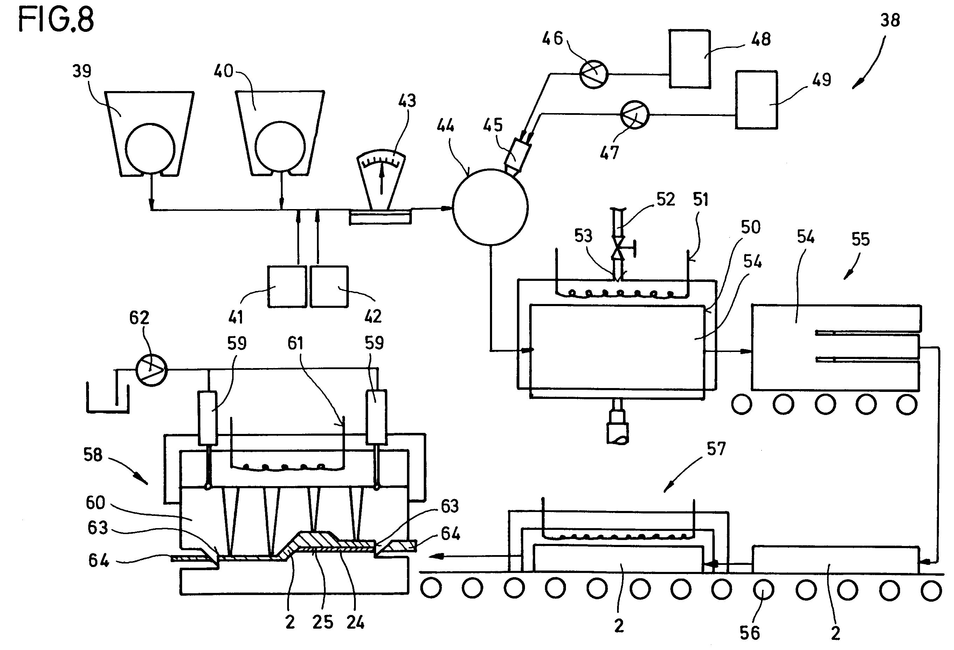

In Fig.7 ist ein weiterer Formteil 33 gezeigt, der in einigen Bereichen aus lediglich einer Mischkunststoffplatte 20 besteht, die in einigen anderen Bereichen durch eine weitere Mischkunststoffplatte 21 verstärkt ist. Überdies ist auf einer Seite des Formteiles 33 eine Deckschicht 32 aufgebracht. Die Herstellung eines derartigen Formteiles 33 kann nun dadurch erfolgen, daß zuerst ein Zuschnitt einer Mischkunststoffplatte 20 eingelegt wird, der in die aus Fig.7 ersichtliche Form verformt wird. Gleichzeitig damit kann beispielsweise die Deckschicht 32 mit der Mischkunststoffplatte 20 verbunden werden.

In einem weiteren Arbeitsvorgang oder in mehreren weiteren Arbeitsvorgängen können dann die weiteren Mischkunststoffplatten 21 nach vorheriger Einlage von Verstärkungsteilen 34,35 mit der Mischkunststoffplatte 20 verbunden werden. Zur Aufnahme des beispielsweise mit einem Gewinde versehenen Verstärkungsteiles 35 kann unter Umständen in der Mischkunststoffplatte 21 vor dem Einlegen auch eine Ausnehmung 36 ausgeschnitten werden, sodaß es zu keiner zu starken Verdichtung der Mischkunststoffplatte 21 in diesem Bereich kommt. Selbstverständlich ist es aber auch möglich, bei Verwendung einer entsprechend dicken Mischkunststoffplatte 21 den die Verstärkungsteile 35 aufnehmenden Endteil in einem Arbeitsgang aus der Mischkunststoffplatte 21 herzustellen.

Die Verklebung zwischen den einzelnden Mischkunststoffplatten 20,21 zu einer Mischkunststoffsandwichplatte 31, insbesondere im Bereich der Verstärkungsteile 34,35, kann wieder durch das Einbringen von Schmelzklebepulver bzw. eine durch eine Schmelzklebefolie gebildete Kleberschicht 37 erfolgen.

In Fig.8 ist ein Blockschaltbild einer Anlage 38 zur Herstellung von erfindungsgemäßen Mischkunststoffplatten 2 gezeigt. Diese Anlage umfaßt Zerkleinerungsvorrichtungen 39,40, beispielsweise Mühlen- oder Reißwölfe, wobei beispielsweise in der als Abfallmühle ausgebildeten Zerkleinerungsvorrichtung 39 PUR-Weichschaumabfall rein oder mit SK-Beschichtungen, Stoffresten und dgl., auf Korngrößen zwischen 2 und 20 mm zerkleinert wird. In der als Mühle ausgebildeten Zerkleinerungsvorrichtung 40 können dagegen PUR-Hartabfälle, wie Integralteile oder RIM-Teile zermahlen oder auch thermoplastische Kunststoffabfälle ebenfalls auf entsprechende Korngrößen zwischen 0,5 und 20 mm zerkleinert werden. Desweiteren können in Vorratsbehältern 41,42 verschiedene Füllstoffe, wie z.B. Korkgranulat, Gummigranulat, Kreide oder Kalziumkarbonat, vorrätig gehalten werden. Diese zuletzt genannten Materialien können als Füllstoffe bei der Herstellung von Mischkunststoffplatten 2 Verwendung finden. Die einzelnen Weichschaumabfälle aus der Zerkleinerungsvorrichtung 39 bzw. die Hartabfälle aus der Zerkleinerungsvorrichtung 40 bzw. die Füllstoffe aus den Vorratsbehältern 41,42, werden einer Waage 43 zugeführt und entsprechend dem geplanten Mischungsverhältnis für den Einsatzfall der jeweiligen Mischkunststoffplatte 2 in der entsprechenden Dosierung einer Mischtrommel 44 zugeführt. Nachdem die einzelnen Bestandteile - Trockenbestandteile - in der Mischtrommel 44 enthalten sind, werden sie so lange vermischt, bis ein gewünschter Mischungsgrad zwischen den einzelnen Füllstoffen bzw. dem Schaumstoffgranulat erreicht ist. Daraufhin wird das über einen Mischkopf 45 über Pumpen 46,47 aus den Tanks 48,49 geförderte Rohmaterial in dem gewünschten Mischungsverhältnis in die Mischtrommel 44 eingebracht und der Mischvorgang so lange fortgesetzt, bis eine Durchmischung des flüssigen Rohstoffes und des Schaumstoffgranulates bzw. der Füllstoffe erreicht ist. In dem Tank 48 kann dazu beispielsweise Polyol und im Tank 49 Isozyanat vorhanden sein. Der mit dem Schaumstoffgranulat und den Füllstoffen vermischte Rohstoff wird dann anschließend in eine Blockform 50 eingebracht, die gegebenenfalls mit einer Heizvorrichtung 51 auf einer entsprechenden Verfahrenstemperatur gehalten werden kann. Diese Heizvorrichtung kann durch heiße Flüssigkeiten, Gase oder durch elektrische Heizstäbe erwärmt werden.

Diese Blockform ist weiters mit einer Versorgungsleitung 52 und einer Einlaßöffnung 53 versehen. Durch die Versorgungsleitung kann in die Blockform während des Schäumvorganges bzw. anschließend nach dem Aufschäumen des Rohstoffes beispielsweise Dampf, z.B. Wasserdampf oder dgl., eingeführt werden, wodurch die Reaktionszeit verkürzt und ein Ausreagieren des Schaumstoffblockes 54 beschleunigt werden kann.

Danach wird der Schaumstoffblock 54 mit den darin eingeschäumten Schaumstoffgranulaten bzw. den Füllstoffen einer Schneideanlage 55 zugeführt, in der der Schaumstoffblock 54 auf einzelne Mischkunststoffplatten 2 in gewünschter Dicke zerschnitten wird. Diese Mischkunststoffplatten 2 werden beispielsweise über Förderanlagen 56 einer Heizvorrichtung 57, die beispielsweise durch einen Heiztisch gebildet sein kann, zugeführt. In diesem Heiztisch bzw. einer entsprechenden anderen Heizvorrichtung, werden die Mischkunststoffplatten 2 auf eine Temperatur zwischen 170 und 220 Grad C vorgewärmt, sodaß bei der anschließenden Verformung eine einheitliche Verdichtung bzw. Verformung des Zellgerüstes 14 - wie dies anhand der vorstehenden Figuren bereits beschrieben wurde - erfolgen kann.

Die vorgeheizte Mischkunststoffplatte 2 wird beispielsweise gemeinsam mit einer Deckschicht 24 und einer Schmelzklebefolie 25 in eine Preßform 58 eingelegt. Über Preßantriebe 59, z.B. hydraulisch beaufschlagte Zylinderkolbenanordnungen, wird ein Preßstempel 60 in die Preßform 58 eingedrückt und verformt die Mischkunststoffplatte 2 sowie die Deckschicht 24 und die Schmelzklebefolie 25, wobei sich durch die von der Mischkunststoffplatte 2 ausgehenden Wärme die Schmelzklebefolie 25 auflöst und die Deckschicht 24 und die Mischkunststoffplatte 2 miteinander verklebt. Zusätzlich ist es möglich, den Preßstempel 60, wie schematisch angedeutet, mit einer Heizeinrichtung 61 zu versehen, die beispielsweise mittels Heißdampf, heißer Gase oder auch elektrisch oder durch Umwälzung entsprechend erwärmter Flüssigkeit auf 170 bis 220 Grad C gehalten werden kann. Sind die Preßantriebe 59 durch Hydraulikzylinder gebildet, so ist es möglich, mit einer Hydraulikpumpe 62 auf den Preßstempel 60 zumindest eine derartige Kraft auszuüben, daß die Mischkunststoffplatte 2 mit einem Druck von 10 bar gegen die Preßform 58 gepreßt wird. Dieser Druck reicht bei der angegebenen Verfahrenstemperatur von 170 bis 220 Grad C üblicherweise aus, um eine Verdichtung der Mischkunststoffplatte 2 oder mehrerer Mischkunststoffplatten in dem gewünschten Ausmaß zu ermöglichen. Selbstverständlich ist es bei stärkeren Verdichtungen bzw. größeren Dicken der Mischkunststoffplatten auch möglich, über die Hydraulikpumpe 62 höhere Drücke auf den Preßstempel 60 und damit auf die Mischkunststoffplatte 2 auszuüben.

Wie aus der Darstellung im Bereich der Preßform 58 zu ersehen ist, sind die umlaufenden Kanten des Preßstempels 60 als Schneidkanten 63 ausgebildet und werden diese über die Einwirkungsdauer der Temperatur- und Druckbelastung auf die Mischkunststoffplatte 2 in einer Distanz von 0,05 bis 0,5 mm oberhalb der Preßform 58 gehalten. Ist die Verfahrenszeit abgelaufen und dadurch eine bleibende Verformung der Mischkunststoffplatte 2 erreicht, wird der Preßstempel 60 um diese Distanz zusätzlich abgesenkt und gegen die Preßform 58 gedrückt, wodurch schematisch angedeutete Überstände 64, die durch den geringen Spalt zwischen Schneidkanten 63 und Preßform 58 während der Verformung der Mischkunststoffplatte 2 austreten konnten, abgetrennt werden und somit bereits ein fertig beschnittener Formteil erreicht werden kann.

Selbstverständlich ist es im Rahmen der Erfindung auch möglich, anstelle der in Fig.8 dargestellten und beschriebenen Anlage 38 auch jede beliebige andere Vorrichtung zum Herstellen von Mischkunststoffplatten 2, sowie zu deren Beschneidung und Erhitzung sowie Verformung zu verwenden, soweit sie in der Lage ist, die in der Beschreibung angegebenen Temperaturen und Drucke zu erzeugen bzw. eine Verarbeitung von Mischkunststoffplatten mit den darin eingeschäumten Füllstoffen bzw. Schaumstoffgranulaten zu ermöglichen.

### Bezugszeichenaufstellung

- 1: Formteil
- 2: Mischkunststoffplatte
- 3: Stirnende
- 4: Dicke
- 5: Dicke
- 6: Wandstärke
- 7: Ausnehmung
- 8: Ausnehmung
- 9: Oberfläche
- 10: Oberfläche
- 11: Randwulst
- 12: Stirnende
- 13: Seitenkante
- 14: Zellgerüst
- 15: Zellsteg
- 16: Zelle
- 17: Füllstoff
- 18: Schaumstoffgranulat
- 19: Formteil
- 20: Mischkunststoffplatte
- 21: Mischkunststoffplatte
- 22: Ausgangsdicke
- 23: Dicke
- 24: Deckschicht
- 25: Schmelzklebefolie
- 26: Oberfläche
- 27: Schmelzpulver
- 28: Verstärkungsteil
- 29: Oberseite
- 30: Dicke
- 31: Mischkunststoffsandwichplatte
- 32: Deckschicht
- 33: Formteil
- 34: Verstärkungsteil
- 35: Verstärkungsteil
- 36: Ausnehmung
- 37: Kleberschicht
- 38: Anlage
- 39: Zerkleinerungsvorrichtung
- 40: Zerkleinerungsvorrichtung
- 41: Vorratsbehälter
- 42: Vorratsbehälter
- 43: Waage
- 44: Mischtrommel
- 45: Mischkopf
- 46: Pumpe
- 47: Pumpe
- 48: Tank
- 49: Tank
- 50: Blockform
- 51: Heizvorrichtung
- 52: Versorgungsleitung
- 53: Einlaßöffnung
- 54: Schaumstoffblock
- 55: Schneideanlage
- 56: Förderanlage
- 57: Heizvorrichtung
- 58: Preßform
- 59: Preßantrieb
- 60: Preßstempel
- 61: Heizeinrichtung
- 62: Hydraulikpumpe
- 63: Schneidkante
- 64: Überstand

## Patentansprüche

1. Formteil (1) aus einer Mischkunststoffplatte (2,20,21) aus einem Schaumstoff, in den Schaumstoffgranulate (18) aus einem Schaumstoff verteilt eingeschäumt sind, mit zumindest bereichsweise bleibend verformten Zellstegen (15) und bzw. oder Zellwänden, dadurch gekennzeichnet, daß die Schaumstoffgranulate (18) aus weichen Schaumstoff mit einer Korngröße von 2 bis 20 mm gebildet sind und weitere Füllstoffe (17), z.B Korkgranulat, Gummigranulat, Kreide, Calziumcarbonat, Hartpolyurethanabfälle oder thermoplastische Kunststoffabfälle in einer Korngröße von 2 bis 20 mm in dem weichen, gegebenenfalls elastischen Schaumstoff ebenfalls eingeschäumt sind und die Zellstege (15) und bzw. oder Zellwände zwischen den einzelnen Flocken des Schaumstoffgranulates (18) und/oder des Füllstoffes (17) sowie die des Schaumstoffgranulates (18) und gegebenenfalls der Füllstoffe (17) in über die Fläche der Mischkunststoffplatte (2,20,21)verteilten, auf ein unterschiedliches Raumgewicht verdichteten Bereichen thermisch und/oder mechanisch bleibend plastisch verformt sind.

2. Formteil nach Anspruch 1 , dadurch gekennzeichnet, daß der Formteil (1) aus mehreren über Kleberschichten (37) miteinander verbundenen, auf unterschiedliches Raumgewicht verdichteten Mischkunststoffplatten (2,20,21) besteht.

3. Formteil nach Anspruch 1 oder 2, dadurch gekennzeichnet, daß die Gewichtsteile der Schaumstoffgranulate bzw. der Füllstoffe (17) der einzelnen Mischkunststoffplatten (2,20,21) unterschiedlich sind.

4. Formteil nach einem oder mehreren der Ansprüche 1 bis 3, dadurch gekennzeichnet, daß als Kleber zwischen zwei Mischkunststoffplatten (20,21) Schmelzpulver (27), wie z.B. Phenolharzpulver und bzw. oder eine Schmelzklebefolie (25), angeordnet ist.

5. Formteil nach einem oder mehreren der Ansprüche 1 bis 4, dadurch gekennzeichnet, daß in einer Ausnehmung (36) einer Mischkunststoffplatte (20,21) und bzw. oder zwischen zwei Mischkunststoffplatten (20,21) Verstärkungsteile (28,34,35) aus Metall und bzw. oder Kunststoff angeordnet sind.

6. Formteil nach einem oder mehreren der Ansprüche 1 bis 5, dadurch gekennzeichnet, daß die Mischkunststoffplatten (2,20,21) räumlich verformt sind.

7. Formteil nach einem oder mehreren der Ansprüche 1 bis 6, dadurch gekennzeichnet, daß die Zellstege (15) und bzw. oder die Zellwände der einzelnen Mischkunststoffplatten (2,20,21) unterschiedlich stark verformt sind und diese ein unterschiedlich hohes Raumgewicht bei in etwa gleich hohem Anteil an weichem Schaumstoffgranulat (18) und Füllstoffen (17) aufweisen.

8. Formteil nach einem oder mehreren der Ansprüche 1 bis 7, dadurch gekennzeichnet, daß die Verstärkungsteile (28,34,35) aus Faservliesen, Gewirke oder Gewebe, aus Stoff-, Woll- oder Metall- oder Glas- oder Kohle- oder Kunststoffäden oder Fasern oder aus Kunststoffolien gebildet sind.

9. Verfahren zur Herstellung von Formteilen aus Mischkunststoffplatten (2), bei welchen der flüssige Rohstoff eines Schaumstoffes mit einem zerkleinerten Schaumstoffgranualt (18) vermischt und danach gemeinsam mit diesem in eine Blockform eingebracht wird und durch das Ausreagieren des flüssigen Rohstoffes ein Schaumstoffblock hergestellt wird, dadurch gekennzeichnet, daß das Schaumstoffgranulat (18) aus weichem Schaumstoff auf eine Korngröße von 2 bis 20 mm zerkleinert und dem Rohstoff auch Füllstoffe (17), z.B. Korkgranulat, Gummigranulat, Kreide, Kalziumkarbonat oder Hartpolyurethanabfälle, insbesondere zermahlene Integralteile oder thermoplastische Kunststoffabfällen in einer Korngröße von 2 bis 20 mm zugesetzt und mit dem flüssigen Rohstoff für einen weichen und/ oder elastischen Schaumstoff vermischt wird und der Schaumstoffblock (54) in Mischkunststoffplatten (2) zerschnitten wird, diese auf eine Temperatur von ca. 120 bis 250 Grad erwärmt werden und dabei in unterschiedlichen Bereichen die Zellstege (15) und/oder Zellwände des Schaumstoffes, des Schaumstoffgranulates (18) und/oder des Füllstoffes (17) unter Druck- und Temperatureinwirkung auf ein höheres Raumgewicht verformt werden.

10. Verfahren nach Anspruch 9, dadurch gekennzeichnet, daß die Mischung 0 bis 50 Gewichtsteile Füllstoffe (17), 5 bis 25 Gewichtsteile Rohstoff für einen weichen Schaumstoff, insbesondere Polyol und Isozyanat und den restlichen Anteil auf 100 Gewichtsteile Schaumstoffgranulat (18) umfaßt.

11. Verfahren nach Anspruch 9 oder 10, dadurch gekennzeichnet, daß das Schaumstoffgranulat (18) und die Füllstoffe (17) gewogen in eine Mischtrommel (44) eingebracht und anschließend durchmischt werden, worauf die Komponenten des flüssigen Rohstoffes dosiert und miteinander vermischt und der Rohstoff danach in die Mischtrommel (44) eingebracht und mit dem in der Mischtrommel (44) vorhandenen Schaumstoffgranulat (18) und den Füllstoffen (17) zu einer Mischung vermischt wird.

12. Verfahren nach einem oder mehreren der Ansprüche 9 bis 11, dadurch gekennzeichnet, daß die Mischung aus der Mischtrommel (44) in die Blockform (50) eingebracht wird.

13. Verfahren nach einem oder mehreren der Ansprüche 9 bis 12, dadurch gekennzeichnet, daß das Schaumstoffgranulat (18) bzw. die Füllstoffe (17) allseitig mit dem Rohstoff benetzt werden.

14. Verfahren nach einem oder mehreren der Ansprüche 9 bis 13, dadurch gekennzeichnet, daß die Feuchtigkeit zum Ausbilden der Mischung nach dem Vermischen des Schaumstoffgranulates (18) und bzw. oder der Füllstoff (17) mit dem Rohstoff für einen überwiegend offenzelligen Weichschaumstoff zugeführt wird.

15. Verfahren nach einem oder mehreren der Ansprüche 9 bis 14, dadurch gekennzeichnet, daß die Feuchtigkeit unmittelbar nach Beginn des Einbringens der Mischung in die Blockform (50) zugeführt wird.

16. Verfahren nach einem oder mehreren der Ansprüche 9 bis 15, dadurch gekennzeichnet, daß Feuchtigkeit dampfförmig in die Blockform (50) eingebracht wird.

17. Verfahren nach einem oder mehreren der Ansprüche 9 bis 16, dadurch gekennzeichnet, daß die Mischkunststoffplatte (2) räumlich verformt wird.

18. Verfahren nach einem oder mehreren der Ansprüche 9 bis 17, dadurch gekennzeichnet, daß die Mischkunststoffplatte (2) in voneinander distanzierten Bereichen unterschiedlich stark verformt wird.

19. Verfahren nach einem oder mehreren der Ansprüche 9 bis 18, dadurch gekennzeichnet, daß auf eine oder mehrere Oberflächen (26) der Mischkunsstoffplatte (2,20,21) insbesondere vor dem Erwärmen Schmelzpulver (27) und bzw. oder Schmelzklebefolien (25) aufgebracht werden.

20. Verfahren nach einem oder mehreren der Ansprüche 9 bis 19, dadurch gekennzeichnet, daß auf eine oder mehrere Oberflächen (26) der Mischkunststoffplatte (2,20,21) insbesondere vor dem Erwärmen Deckschichten (24), wie z.B. ein Faservlies, ein Gewirke oder Gewebe aus Natur- oder Kunstfasern oder Kunststoffolien, aufgebracht werden und durch die Erhitzung insbesondere beim Vorwärmen der Mischkunststoffplatte (2,20,21) durch ein Aufschmelzen der Oberfläche (26) oder des Schmelzpulvers (27) oder der Schmelzklebefolie (25) miteinander verbunden werden, worauf die Mischkunststoffplatte (2,20,21) verformt wird.

21. Verfahren nach einem oder mehreren der Ansprüche 9 bis 20, dadurch gekennzeichnet, daß mehrere Mischkunststoffplatten (2,20,21), insbesondere mit unterschiedlichen Wandstärken, zu einer Mischkunststoffsandwichplatte (31) vereinigt werden, wobei vorzugsweise die Verbindung der einzelnen Mischkunststoffplatten (20,21) über Kleberschichten (37), beispielsweise Schmelzpulver (27) oder Schmelzklebefolien (25), erfolgt.

22. Verfahren nach einem oder mehreren der Ansprüche 9 bis 21, dadurch gekennzeichnet, daß zwischen den einzelnen Mischkunststoffplatten (2,20,21) Verstärkungsteile (28,34,35) aus Metall und bzw. oder Kunststoff eingelegt und gemeinsam mit der Mischkunststoffsandwichplatte (31) räumlich verformt werden.

23. Verfahren nach einem oder mehreren der Ansprüche 9 bis 22, dadurch gekennzeichnet, daß in Ausnehmungen (36) von Mischkunststoffplatten (20,21) Verstärkungsteile (28,34,35) aus Metall und bzw. oder Kunststoff eingelegt werden.

24. Verfahren nach einem oder mehreren der Ansprüche 9 bis 23, dadurch gekennzeichnet, daß eine vorgewärmte Mischkunststoffplatte (2, 20,21) in die Preßform (58) eingelegt und durch bleibende Verformung der Zellwände oder Zellstege (15) auf ein erstes höheres Raumgewicht verdichtet wird, worauf gegebenenfalls nach dem Einbringen eines Schmelzpulvers (27) und bzw. oder einer Schmelzklebefolie (25) durch eine bleibende Verformung der Zellstege (15) und bzw. oder Zellwände der zweiten Mischkunststoffplatte (2,20,21) diese auf ein zweites vom ursprünglichen bzw. dem ersten unterschiedliches Raumgewicht verdichtet wird, wobei vorzugsweise zwischen den beiden Mischkunststoffplatten (2,20,21) Verstärkungsteile (28,34,35) eingelegt werden.

25. Verfahren nach einem oder mehreren der Ansprüche 9 bis 24, dadurch gekennzeichnet, daß nach dem Verdichten der ersten Mischkunststoffplatte (20) und vor dem Verdichten der weiteren Mischkunststoffplatte (21) ein Deckel der Preßform (58) ausgetauscht wird.

26. Verfahren nach einem oder mehreren der Ansprüche 9 bis 25, dadurch gekennzeichnet, daß die eingelegten Verstärkungsteile (28,34,35) über die aufgeschmolzenen Oberflächen (26) der diesen unmittelbar benachbarten Mischkunststoffplatten (2,20,21) bzw. den weichen Schaumstoff oder durch Kleber, z.B. Schmelzklebefolien (25) oder Schmelzpulver (27), die insbesondere durch Wärme und bzw. oder Druckeinwirkung aktiviert werden, mit den unmittelbar benachbarten Mischkunststoffplatten (2,20,21) bzw. dem Weichschaumstoff verbunden werden.

27. Verfahren nach einem oder mehreren der Ansprüche 9 bis 26, dadurch gekennzeichnet, daß der Verformungsvorgang der Mischkunststoffplatten (2,20,21) bzw. der Mischkunststoffsandwichplatten (31) 0,05 mm bis 0,5 mm vor der Trennfläche der Preßform (58) endet.

28. Verfahren nach einem oder mehreren der Ansprüche 9 bis 27, dadurch gekennzeichnet, daß nach Ablauf der Verformungszeit die Preßformteile aufeinandergepreßt und die Kontur und bzw. oder Ausnehmungen (36) wie z.B. Freistellungen, Befestigungslöcher, Durchbrüche oder dgl. ausgestanzt werden.

## Claims

1. Moulded (1) foam composite plastic panel (2, 20, 21) into which foamed material granulates (18) of a foaming material have been foam distributed, comprising cellular webs (15) and/or cellular walls which have been permanently deformed at least in some areas, characterised in that the foamed material granulates (18) are formed from soft foamed material with a grain size of 2 to 20 mm and additional filler materials (17), e.g. cork granulate, rubber granulate, chalk, calcium carbonate, hard polyurethane scrap or thermoplastic material scrap having a grain size of 2 to 20 mm, are also foamed in the soft, if necessary elastic foamed material, and the cellular webs (15) and/or cellular walls between the individual floccules of the foamed material granulate (18) and/or the filler material (17) and those of the foamed material granulate (18) and if necessary the filler materials (17) are thermally and/or mechanically permanently plastically deformed in regions distributed over the surface of the composite plastic panel (2, 20, 21) and compacted to varying densities.

2. Moulded panel according to claim 1, characterised in that the moulded panel (1) comprises a plurality of composite plastic panels (2, 20, 21), joined together by means of adhesive layers (37) and compacted to varying densities.

3. Moulded panel according to claim 1 or 2, characterised in that the proportions by weight of the foamed material granulates and the filler materials (17) of the individual composite plastic panels (2, 20, 21) are different.

4. Moulded panel according to one or several of claims 1 to 3, characterised in that fusible powder (27), such as e.g. phenolic resin powder (28) and/or a fusible adhesive foil (25), is provided as an adhesive between two composite plastic panels (20, 21).

5. Moulded panel according to one or several of claims 1 to 4, characterised in that reinforcing elements (28, 34, 35) made of metal and/or plastic are installed in a recess (36) in the composite plastic panel (20, 21) and/or between two composite plastic panels (20, 21).

6. Moulded panel according to one or several of claims 1 to 5, characterised in that the composite plastic panels (2, 20, 21) are spatially deformed.

7. Moulded panel according to one or several of claims 1 to 6, characterised in that the cellular webs (15) and/or cellular walls of the individual composite plastic panels (2, 20, 21) are deformed to different extents, the panels having densities of various magnitudes in respect of an approximately equal ratio of soft foamed material granulate (18) to filler materials (17).

8. Moulded panel according to one or several of claims 1 to 7, characterised in that the reinforcing elements (28, 34, 35) are made of fibrous fleeces, knitted fabric, woven fabric, fabric-, wool-, metal-, glass-, carbon- or plastic threads or fibres or plastic foils.

9. Method for the production of moulded composite plastic panels (2) in which the liquid raw material of a foaming material is mixed with a reduced foamed material granulate (18) and subsequently introduced together therewith into a block mould, and a foamed material block is produced by the reaction of the liquid raw material, characterised in that the foamed material granulate (18) made of soft foamed material is reduced to a grain size of 2 to 20 mm, and filler materials (17), e.g. cork granulate, rubber, chalk, calcium carbonate or hard polyurethane scraps, in particular ground integral parts or thermoplastic scraps, are also added to the raw material with a grain size of 2 to 20 mm, and mixed with the liquid raw material for a soft and/or elastic foamed material and the foamed material block (54) is cut into composite plastic panels (2), the latter are heated to a temperature of about 120 to 250 degrees and in different areas the cellular webs (15) and/or cellular walls of the foamed material, the foamed material granulate (18) and/or the filler material (17) are deformed under the effect of pressure and temperature to a greater density.

10. Method according to claim 9, characterised in that the mixture contains 0 to 50 parts by weight of filler materials (17), 5 to 25 parts by weight of raw material for a soft foamed material, in particular polyol and isocynate, and a residual proportion of up to 100 parts by weight of said foamed material granulate (18).

11. Method according to claim 9 or 10, characterised in that the foamed material granulate (18) and the filler materials (17) are weighed, placed in a mixing drum (44) and intermixed thereafter, after which the components of the liquid raw material are then metered and intermixed and the raw material is then placed in the mixing drum (44) and is mixed into a composition with the foamed material granulate (18) in the mixing drum (44) and with the filler materials (17).

12. Method according to one or several of claims 9 to 11, characterised in that the mixture is conveyed from the mixing drum (44) into the block mould (50).

13. Method according to one or several of claims 9 to 12, characterised in that the foamed material granulate (18) and/or the filler materials (17) are omnilaterally wetted by the raw material.

14. Method according to one or several of claims 9 to 13, characterised in that humidity for forming the mixture into a preponderantly open-celled soft foamed material is applied after intermixing the foamed material granulate (18) and/or filler materials (17) with the raw material.

15. Method according to one or several of claims 9 to 14, characterised in that the humidity is applied immediately after starting to introduce the mixture into the block mould (50).

16. Method according to one or several of claims 9 to 15, characterised in that humidity is fed into the block mould (50) in vapour form.

17. Method according to one or several of claims 9 to 16, characterised in that the composite plastic panel (2) is spatially deformed.

18. Method according to one or several of claims 9 to 17, characterised in that the composite plastic panel (2) is deformed to different extents in mutually spaced apart areas thereof.

19. Method according to one or several of claims 9 to 18, characterised in that fusible powder (27) or fusible adhesive foils (25) are placed on one or more surfaces (26) of the composite plastic panel (2, 20, 21) in particular prior to heating.

20. Method according to one or several of claims 9 to 19, characterised in that cover layers (24), such as e.g. a fibrous fleece, a knitted fabric or woven fabric of natural or synthetic fibres or plastic foils are applied onto one or a plurality of surfaces (26) of the composite plastic panel (2, 20, 21) in particular before heating, and by heating, in particular on preheating the composite plastic panel (2, 20, 21), are bound together by the melting of the surface (26) or the fusible powder (27) or the fusible adhesive foil (25), whereupon the composite plastic panel (2, 20, 21) is deformed.

21. Method according to one or several of claims 9 to 20, characterised in that several of the composite plastic panels (2, 20, 21) in particular having different wall thicknesses are combined to form a composite plastic material sandwich panel (31), whereby preferably the bending between the individual composite plastic panels (20, 21) is established by means of adhesive layers (37), for example fusible powder (27) or fusible adhesive foils (25).

22. Method according to one or several of claims 9 to 21, characterised in that reinforcing elements (28, 34, 35) made of metal and/or plastic are placed between individual composite plastic panels (2, 20, 21) and are spatially deformed together with the composite plastic material sandwich panel (31).

23. Method according to one or several of claims 9 to 22, characterised in that reinforcing elements (28, 34, 35) made of metal and/or plastic are placed in recesses (36) in composite plastic panels (20, 21).

24. Method according to one or several of claims 9 to 23, characterised in that a preheated composite plastic panel (2, 20, 21) is placed into the press mould (58) and is compacted to a first greater density by permanent deformation of cellular walls or cellular webs (15), after which following the application of a fusible powder (27) and/or a fusible adhesive foil (25) the second composite plastic panel (2, 20, 21) is compacted by a permanent deformation of the cellular webs (15) or cellular walls thereof to a second density differing from its initial or first density, whereby reinforcing elements (28, 34, 35) are preferably inserted between the two composite plastic panels (2, 20, 21).

25. Method according to one or several claims 9 to 24, characterised in that a cover of the press mould (58) is exchanged after the compacting of the first composite plastic panel (20) and prior to compacting the second composite plastic panel (21).

26. Method according to one or several of claims 9 to 25, characterised in that the inserted reinforcing elements (28, 34, 35) are bonded to the immediately adjacent composite plastic panels (2, 20, 21) or the soft foamed material by means of the melted surfaces (26) of the immediately adjacent composite plastic panels (2, 20, 21) or the soft foamed material or by adhesives, e.g. fusible adhesive foils (25) or fusible powders (27), which are activated in particular by heat or the effect of compaction.

27. Method according to one or several of claims 9 to 26, characterised in that the deformation process of the composite plastic panels (2, 20, 21) or the composite plastic material sandwich panels (31) is terminated 0.05 mm to 0.5 mm from the parting plane of the press mould (58).

28. Method according to one or several of claims 9 to 27, characterised in that after the deforming period is over the press moulds are pressed together and the profile and/ or recesses (36), such as e.g. openings, fastening holes, breakthroughs or the like are stamped out.

## Revendications

1. Panneau moulé (1) constitué d'un panneau mixte en matière synthétique (2, 20, 21) réalisé en une substance alvéolaire, dans laquelle des granulats (18) de substance alvéolaire sont intégrés, de façon répartie, au stade du moussage, avec des nervures intercellulaires (15) ayant, au moins par zones, une déformation permanente, et, respectivement ou, des parois de cellules, caractérisé en ce que les granulats (18) de substance alvéolaire sont constituées d'une substance alvéolaire souple, d'une taille de grain allant de 2 à 20 mm et d'autres substances de remplissage (17), par exemple un granulat de liège, un granulat de caoutchouc, de la craie, du carbonate de calcium, des déchets de polyuréthanne dur ou des déchets de matière synthétique thermoplastique, ayant une taille de grain située dans la plage allant de 2 à 20 mm, également intégrés au stade du moussage, dans la substance alvéolaire souple, le cas échéant élastique, et les nervures intercellulaires (15) et/ou les parois de cellules se trouvant entre les différents flocons du granulat (18) de substance alvéolaire et/ou de la charge (17) ainsi que celles du granulat (18) de substance alvéolaire et, le cas échéant, des substances de remplissage (17) sont déformées thermiquement et/où plastiquement, avec une déformation mécanique résiduelle, dans des zones réparties sur la surface de la plaque (2, 20, 21) de la substance synthétique mixte, compactées à un poids spécifique différent.

2. Panneau moulé selon la revendication 1, caractérisé en ce que le panneau moulé (1) est constitué de plusieurs panneaux (2, 20, 21) en matière synthétique mixte, reliés ensemble par des couches d'adhésif (37) et compactés, chacun, pour atteindre un poids spécifique différent.

3. Panneau moulé selon la revendication 1 ou 2, caractérisé en ce que les parties en poids des granulats de substance alvéolaire ou des charges (17) des différents panneaux (2, 20, 21) en matière synthétique mixte sont différentes.

4. Panneau moulé selon l'une ou plusieurs des revendications 1 à 3, caractérisé en ce qu'est disposé, à titre d'adhésif, entre deux panneaux (20,21) en matière synthétique mixte, de la poudre fusible (27), telle que, par exemple, de la poudre de résine phénolique et/ou une feuille à adhésif fusible (25).

5. Panneau moulé selon l'une ou plusieurs des revendications 1 à 4, caractérisé en ce que, dans un évidement (36) d'un panneau (20, 21) en matière synthétique mixte et/ou entre deux panneaux (20, 21) en matière synthétique mixte sont disposées des parties de renforcement (28, 34, 35) en métal et/ou en matière synthétique.

6. Panneau moulé selon l'une ou plusieurs des revendications 1 à 5, caractérisé en ce que les panneaux (2, 20, 21) en matière synthétique mixte sont déformés tridimensionnellement.

7. Panneau moulé selon l'une ou plusieurs des revendications 1 à 6, caractérisé en ce que les nervures intercellulaires (15) et/ou les parois de cellules des différents panneaux (2, 20, 21) en matière synthétique mixte ont une déformation d'ampleur différente et présentent un poids spécifique différent, avec une teneur à peu près égale en granulat (18) de substance alvéolaire souple et en substances de remplissage (17).

8. Panneau moulé selon l'une ou plusieurs des revendications 1 à 7, caractérisé en ce que les parties de renforcement (28, 34, 35) sont constituées de nappes de fibres de verre, de produit à maille et/ou de tissu, en filaments ou fibres d'étoffes, de laine ou de métal ou de verre ou de carbone ou de matière synthétique, ou bien de feuilles de matière synthétique.

9. Procédé de fabrication de panneaux moulés constitués de plaques (2) en matière synthétique mixte, dans lesquels la matière première liquide d'une substance alvéolaire est mélangée à un granulat (18) broyé de substance alvéolaire, puis est introduite, conjointement avec celui-ci, dans un moule à bloc et, par la mise en réaction de la matière première liquide, est fabriqué un bloc de substance alvéolaire, caractérisé en ce que le granulat (18) de substance alvéolaire, constitué d'une substance alvéolaire souple, est broyé jusqu'à atteinte d'une taille de grain comprise dans la plage allant de 2 à 20 mm et à la matière première sont également ajoutées des substances de remplissage (17) par exemple, du granulat de liège, du granulat de caoutchouc, de la craie, du carbonate de calcium ou des déchets de polyuréthanne dur, en particulier des pièces monolithiques ou des déchets de matière synthétique thermoplastique, ayant été broyés finement, jusqu'à atteinte d'une taille de grain comprise dans la plage allant de 2 à 20 mm, et mélangées à la matière première liquide pour obtenir une substance alvéolaire souple et/ou élastique, et le bloc (54) de substance alvéolaire étant découpé en plaques (2) en matière synthétique mixte, ces plaques étant chauffées à une température comprise dans la plage allant d'environ 120 à 250°C et, dans des zones différentes, les nervures intercellulaires (15) et/ou les parois de cellules de la substance alvéolaire, du granulat (18) de substance alvéolaire et/ou de la substance de remplissage (17) étant déformées sous l'effet de la pression et de la temperature, pour obtenir un poids spécifique plus élevé.

10. Procédé selon la revendication 9, caractérisé en ce que le mélange comprend de 0 à 50 parties en poids de substances de remplissage (17), de 5 à 25 parties en poids de matière brute pour obtenir une substance alvéolaire souple, en particulier du polyol et le l'isocyanate, et la partie restante, pour donner un total de 100 parties en poids, est constituée de granulat (18) en substance alvéolaire.

11. Procédé selon la revendication 9 ou 10, caractérisé en ce que le granulat (18) en substance alvéolaire et les substances de remplissage (17) sont pesés, introduits dans un tambour de mélange (44) puis mélangés intimement, à la suite de quoi les composants de la matière première liquide sont dosés et mélangés ensemble et la matière première est ensuite introduite dans le tambour de mélange (44) et mélangée au granulat (18) de substance alvéolaire se trouvant dans le tambour (44) et aux substances de remplissage (17) pour donner un produit mélangé.

12. Procédé selon l'une ou plusieurs des revendications 9 à 11, caractérisé en ce que le mélange issu du tambour de mélange (44) est introduit dans le moule à bloc (50).

13. Procédé selon l'une ou plusieurs des revendications 9 à 12, caractérisé en ce que le granulat (18) de substance alvéolaire respectivement les substances de remplissage (17) sont mouillés de toutes parts par la matière brute.

14. Procédé selon l'une ou plusieurs des revendications 9 à 13, caractérisé en ce que l'humidité, prévue pour réaliser le mélange, est amenée après mélange du granulat (18) en substance alvéolaire et/ou la substance de remplissage (17) avec la matière brute, pour l'obtention d'une substance alvéolaire souple à majeure partie de cellules ouvertes.

15. Procédé selon l'une ou plusieurs des revendications 9 à 14, caractérisé en ce que l'humidité est amenée directement après début de l'introduction du mélange dans le moule à bloc (50).

16. Procédé selon l'une ou plusieurs des revendications 9 à 15, caractérisé en ce que l'humidité est introduite sous forme de vapeur dans le moule à bloc (50).

17. Procédé selon l'une ou plusieurs des revendications 9 à 16, caractérisé en ce que la plaque (2) de substance synthétique mixte est déformée tridimensionnellement.

18. Procédé selon l'une ou plusieurs des revendications 9 à 17, caractérisé en ce que la plaque (2) de substance synthétique mixte est déformée avec des ampleurs de déformation différentes dans des zones distantes les unes des autres.

19. Procédé selon l'une ou plusieurs des revendications 9 à 18, caractérisé en ce qu'une poudre fusible (27) et/ou des feuilles adhésives fusibles (25) sont appliquées sur une ou plusieurs surfaces (26) de la plaque (2, 20, 21) en substance synthétique mixte, en particulier avant chauffage.

20. Procédé selon l'une ou plusieurs des revendications 9 à 19, caractérisé en ce que, sur une ou plusieurs surfaces (26) de la plaque (2, 20, 21) en substance synthétique mixte, en particulier avant chauffage, des couches de couverture (24), telles que, par exemple, une nappe en fibres, un produit à maille ou un tissu, en fibres naturelles ou synthétiques ou en feuilles en matière synthétique, sont appliquées et reliées ensemble, par le chauffage, en particulier lors du préchauffage de la plaque (2, 20, 21) en matière synthétique mixte, par une mise en fusion de la surface (26) ou de la poudre fusible (27) ou de la feuille adhésive fusible (25), à la suite de quoi, la plaque (2, 20, 21) en matière synthétique mixte est déformée.

21. Procédé selon l'une ou plusieurs des revendications 9 à 20, caractérisé en ce que plusieurs plaques (2, 20, 21) en substance synthétique mixte, en particulier ayant des épaisseurs de paroi différentes, sont réunies pour donner une plaque sandwich (31) en matière synthétique mixte, de préférence la liaison entre les différentes plaques (20, 21) en matière synthétique mixte s'effectuant par l'intermédiaire de couches adhésives (37), par exemple une poudre fusible (27) ou des feuilles à adhésif fusible (25).

22. Procédé selon l'une ou plusieurs des revendications 9 à 21, caractérisé en ce que, entre les différentes plaques (2, 20, 21) en matière synthétique mixte, des parties de renforcement (28, 34, 35) en métal et/ou en matière synthétique sont insérées et sont déformées tridimensionnellement conjointement avec la plaque sandwich (31) en matière synthétique mixte.

23. Procédé selon l'une ou plusieurs des revendications 9 à 22, caractérisé en ce que des parties de renforcement (28, 34, 35) en métal et/ou en matière synthétique sont insérées dans des évidements (36) des plaques (20, 21) en matière synthétique mixte.

24. Procédé selon l'une ou plusieurs des revendications 9 à 23, caractérisé en ce qu'une plaque (2, 20, 21) en substance synthétique mixte, préchauffée, est insérée dans le moule de pressage (58) et, par une déformation permanente des parois de cellules ou des nervures intercellulaires (15), est compactée pour atteindre un premier poids spécifique plus élevé, à la suite de quoi, le cas échéant après introduction d'une poudre fusible (27) et/ou d'une feuille à adhésif fusible (25), par une déformation permanente des nervures intercellulaires (15) et/ou des parois de cellules de la deuxième plaque (2, 20, 21) en matière synthétique mixte, celle-ci est compactée à une deuxième valeur de poids spécifique, différente du poids spécifique d'origine, respectivement du premier poids spécifique, de préférence des parties de renforcement (28, 34, 35) étant insérées entre les deux plaques (2, 20, 21) en substance synthétique mixte.

25. Procédé selon l'une ou plusieurs des revendications 9 à 24, caractérisé en ce que, après compactage de la première plaque (20) en matière synthétique mixte et avant compactage de l'autre plaque (21) en substance synthétique mixte, on procède au changement du couvercle du moule de pressage (58).

26. Procédé selon l'une ou plusieurs des revendications 9 à 25, caractérisé en ce que les parties de renforcement (28, 34, 35) ayant été insérées sont reliées aux plaques (2, 20, 21) en matière synthétique mixte directement voisines, respectivement à la substance alvéolaire souple, par l'intermédiaire des surfaces (26), portées à fusion et appartenant aux plaques (2, 20, 21) en matière synthétique mixte directement voisines des parties de renforcement (28, 34, 35) ou par l'intermédiaire de la substance alvéolaire souple ou par des adhésifs, par exemple des feuilles à adhésif fusible (25) ou une poudre fusible (27), activées en particulier par l'effet de la chaleur et/ou de la pression.

27. Procédé selon l'une ou plusieurs des revendications 9 à 26, caractérisé en ce que le processus de déformation des plaques (2, 20, 21) en matière synthétique mixte, respectivement des plaques-sandwich (31) en matière synthétique mixte, s'achève à l'atteinte d'une distance de 0,05 mm à 0,5 mm avant la surface de séparation du moule de pressage (58).

28. Procédé selon l'une ou plusieurs des revendications 9 à 27, caractérisé en ce que, après déroulement du temps de déformation, les parties du moule de pressage sont appliquées avec pression l'une sur l'autre et le contour et/ou des évidements (36), tels que par exemple des dégagements, des trous de fixation, des passages ou autres, sont découpés par estampage.
